(19) Europäisches Patentamt / European Patent Office / Office européen des brevets

(11) **EP 2 023 603 A2**

(12) **EUROPEAN PATENT APPLICATION**

(43) Date of publication:
**11.02.2009 Bulletin 2009/07**

(51) Int Cl.:
***H04N 1/60*** (2006.01)

(21) Application number: **08007364.6**

(22) Date of filing: **15.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.07.2007 JP 2007193752**

(71) Applicant: **Fuji Xerox Co., Ltd.**
**Tokyo 107-0052 (JP)**

(72) Inventors:
- **Sasaki, Makoto**
  **Ashigarakami-gun**
  **Kanagawa (JP)**

- **Yamaguchi, Yasuki**
  **Ashigarakami-gun**
  **Kanagawa (JP)**
- **Okutsu, Masaru**
  **Ebina-shi**
  **Kanagawa (JP)**
- **Taguchi, Tomoko**
  **Ebina-shi**
  **Kanagawa (JP)**
- **Aikawa, Koji**
  **Ebina-shi**
  **Kanagawa (JP)**

(74) Representative: **HOFFMANN EITLE**
**Patent- und Rechtsanwälte**
**Arabellastrasse 4**
**81925 München (DE)**

(54) **Colour adjusting apparatus, image forming apparatus, colour adjusting method and program**

(57) The color adjusting apparatus is provided with: a color signal receiving part that receives input of color signals; a distribution density calculating part that calculates a distribution density in a certain color space concerning the color signals received by the color signal receiving part; an adjustment range setting part that sets an adjustment range where the color signals are adjusted in the color space on the basis of the distribution density calculated by the distribution density calculating part; and a color adjusting part that adjusts the color signals included in the adjustment range set by the adjustment range setting part.

FIG.1

**Description**

BACKGROUND

Technical Field

The present invention relates to a color adjusting apparatus, an image forming apparatus, color adjusting method and a program.

Related Art

There are functions of adjusting a color image, called a global color adjustment for correcting the color balance, brightness and the like of an entire color image, and a local color adjustment for correcting a particular area or a particular color to be adjusted. A typical one of the latter local color adjustment is to adjust a particular target color to a color (memory color) memorized as an ideal color of the target color by many people, as close as possible.

For example, Japanese Patent Application Laid Open Publication No. 2006-114006 describes a gray-level transformation technique for adjusting the representation of gray level in a sub-part of an image, independently of an adjustment for the light-dark balance in the entire image.

In the case of the local color adjustment, in general, a color adjustment suitable for, for example, a particular color-adjustment-target region influences colors of areas other than the color-adjustment-target region.

The present invention aims to control a range of a color-adjustment-target region of an image to be adjusted.

SUMMARY

According to first aspect of the invention, there is provided a color adjusting apparatus including: a color signal receiving part that receives input of color signals; a distribution density calculating part that calculates a distribution density in a certain color space concerning the color signals received by the color signal receiving part; an adjustment range setting part that sets an adjustment range where the color signals are adjusted in the color space on the basis of the distribution density calculated by the distribution density calculating part; and a color adjusting part that adjusts the color signals included in the adjustment range set by the adjustment range setting part.

According to second aspect of the present invention, in the first aspect of the color adjusting apparatus, the adjustment range setting part calculates shift amounts for the color signals in the color space, on the basis of the distribution density calculated by the distribution density calculating part, and sets the adjustment range based on the calculated shift amounts, and the color adjusting part adjusts the color signals according to the shift amounts calculated by the adjustment range setting part.

According to third aspect of the present invention, in the second aspect of the color adjusting apparatus, the adjustment range setting part sets, as a center color, a color coordinate point existing closest to a distribution center, and calculates the shift amounts such that the shift amount for shifting the center color to a target color is maximized. The distribution center has a maximum value of the distribution density calculated by the distribution density calculating part, and the target color is a target for adjusting the color signals by the color adjusting part.

According to fourth aspect of the present invention, in the third aspect of the color adjusting apparatus, the adjustment range setting part calculates, based on the shift amount of the center color and the distribution density, the shift amounts respectively for shifting the color signals other than the center color included in the adjustment range toward the target color.

According to fifth aspect of the present invention, in the third aspect of the color adjusting apparatus, the adjustment range setting part multiplies the shift amount of the center color included in the adjustment range by a value indicative of a relative magnitude in the distribution density and a weight assigned to the distribution density, and calculates the shift amounts respectively for shifting the color signals other than the center color included in the adjustment range toward the target color.

According to sixth aspect of the present invention, in the fifth aspect of the color adjusting apparatus, the adjustment range setting part uses the weight having a weight value set to zero for an area beyond a predetermined Euclidean distance from the center color in the color space.

According to seventh aspect of the present invention, in the sixth aspect of the color adjusting apparatus, the adjustment range setting part is configured so as to be capable of changing the Euclidean distance from the center color.

According to eighth aspect of the present invention, there is provided an image forming apparatus including: a color signal receiving part that receives input of color signals; a distribution density calculating part that calculates a distribution density in a certain color space concerning the color signals received by the color signal receiving part; an adjustment range setting part that sets an adjustment range where the color signals are adjusted in the color space on the basis of the distribution density calculated by the distribution density calculating part; a color adjusting part that adjusts the color signals included in the adjustment range set by the adjustment range setting part; and a printing unit that prints the color signals adjusted by the color adjusting part.

According to ninth aspect of the present invention, there is provided a color adjusting method including: receiving input of color signals; calculating a distribution density in a certain color space concerning the received color signals; setting an adjustment range where the color signals are adjusted in the color space on the basis of the calculated distribution density; and adjusting the color signals included in the set adjustment range.

According to tenth aspect of the present invention, there is provided a program causing a computer to execute a process for color adjustment, the process including: receiving input of color signals; calculating a distribution density in a certain color space concerning the received color signals; setting an adjustment range where the color signals are adjusted in the color space on the basis of the calculated distribution density; and adjusting the color signals included in the set adjustment range.

According to eleventh aspect of the present invention, in the tenth aspect of the program, the process of setting the adjustment range calculates shift amounts for the color signals in the color space based on the calculated distribution density, and sets the adjustment range based on the calculated shift amounts, and the process of adjusting the color signals adjusts the color signals according to the calculated shift amounts.

According to twelfth aspect of the present invention, in the eleventh aspect of the program, the process of setting the adjustment range sets, as a center color, a color coordinate point existing closest to a distribution center having a maximum value of the calculated distribution density, calculates the shift amounts such that the shift amount for shifting the center color to a target color being a target for adjusting the color signals is maximized, and calculates the shift amounts respectively for shifting the color signals other than the center color included in the adjustment range toward the target color, based on the shift amount of the center color and the distribution density.

According to thirteenth aspect of the present invention, in the twelfth aspect of the program, the process of setting the adjustment range multiplies the shift amount of the center color included in the adjustment range by a value indicative of a relative magnitude in the distribution density and a weight assigned to the distribution density, and calculates the shift amounts respectively for shifting the color signals other than the center color included in the adjustment range toward the target color.

According to fourteenth aspect of the present invention, in the thirteenth aspect of the program, the process of setting the adjustment range calculates the shift amounts, by using the weight having a weight value set to zero for an area beyond a predetermined Euclidean distance from the center color in the color space.

According to fifteenth aspect of the present invention, in the fourteenth aspect of the program, the process is further provided with changing the predetermined Euclidean distance from the center color, the Euclidean distance defining an area where the weight value is set to zero.

It should be noted that, for the computer readable medium storing a program, this program may be executed by loading, to a RAM, the program stored in a reserved area such as a hard disk or a DVD-ROM. In addition, another aspect of this program may be executed by a CPU while being prestored in a ROM. Moreover, when an apparatus is provided with a rewritable ROM such as an EEPROM, only this program is sometimes provided and installed in the ROM after the assembling of the apparatus is completed. In addition, this program may also be transmitted to an apparatus through a network such as the Internet and then installed in a ROM included in the apparatus, whereby the program is provided.

According to first aspect of the present invention, it is possible to control the color-adjustment-target region of an adjustment-target image in comparison with the case where the present invention is not adopted.

According to second aspect of the present invention, it is possible to set the color adjustment range inside the color space automatically.

According to third aspect of the present invention, it is possible to achieve the local color adjustment according to the characteristics of an adjustment-target image in comparison with the case where the present invention is not adopted.

According to fourth aspect of the present invention, it is possible to achieve the local color adjustment according to the characteristics of an adjustment-target image in comparison with the case where the present invention is not adopted.

According to fifth aspect of the present invention, it is possible to adjust the influence of the distribution density according to the characteristics of an adjustment-target image in comparison with the case where the present invention is not adopted.

According to sixth aspect of the present invention, it is possible to limit the color adjustment range according to the characteristics of an adjustment-target image in comparison with the case where the present invention is not adopted.

According to seventh aspect of the present invention, it is possible to set the size of a region targeted for color adjustment appropriately according to the characteristics of an adjustment-target image.

According to eighth aspect of the present invention, it is possible to control the color-adjustment-target region of an adjustment-target image in comparison with the case where the present invention is not adopted.

According to ninth aspect of the present invention, it is possible to control the color-adjustment-target region of an adjustment-target image in comparison with the case where the present invention is not adopted.

According to tenth aspect of the present invention, it is possible to control the color-adjustment-target region of an adjustment-target image in comparison with the case where the present invention is not adopted.

According to eleventh aspect of the present invention, it is possible to set the color adjustment range inside the color space automatically.

According to twelfth aspect of the present invention, it is possible to achieve the local color adjustment according to the characteristics of an adjustment-target image in comparison with the case where the present invention is not adopted.

According to thirteenth aspect of the present invention, it is possible to adjust the influence of the distribution density according to the characteristics of an adjustment-target image in comparison with the case where the present invention is not adopted.

According to fourteenth aspect of the present invention, it is possible to limit the color adjustment range according to the characteristics of an adjustment-target image in comparison with the case where the present invention is not adopted.

According to fifteenth aspect of the present invention, it is possible to set the size of a region targeted for color adjustment appropriately according to the characteristics of an adjustment-target image.

BRIEF DESCRIPTION OF THE DRAWINGS

Exemplary embodiment (s) of the present invention will be described in detail based on the following figures, wherein:

FIG. 1 is a block diagram showing a functional configuration of an image processing apparatus including a color adjusting apparatus to which a first exemplary embodiment is applied;
FIG. 2 is a block diagram showing an internal configuration of the color adjusting apparatus of the first exemplary embodiment;
FIGs. 3A and 3B are diagrams showing one example of the distribution density (histogram) calculated by the color-distribution-density calculating part;
FIG. 4 is a diagram for explaining the shift amounts of color coordinate points of the adjustment-target pixels calculated by the shift amount calculating part;
FIGs. 5A and 5B are diagrams for explaining the adjustment processing for the color signals by use of the shift amounts acquired from the shift amount calculating part;
FIGs. 6A and 6B are diagrams for explaining the conventional method of setting a color adjustment range by use of a parameter;
FIG. 7 is a view showing one example of a people photograph image having two or more people photographed therein;
FIG. 8 is a flowchart showing one example of the procedure of color signal adjustment processing executed by the color-distribution-density calculating part, the shift amount calculating part and the color adjusting part in the color adjusting apparatus of the first exemplary embodiment;
FIG. 9 is a diagram showing one example of a characteristic of a weight used in a shift amount calculating part;
FIG. 10 is a diagram for explaining one example of the shift amounts of the adjustment-target colors calculated by the shift amount calculating part in the second exemplary embodiment; and
FIG. 11 is a diagram for explaining one example of the shift amounts of the adjustment-target colors calculated by the shift amount calculating part of the second exemplary embodiment.

DETAILED DESCRIPTION

Hereinafter, exemplary embodiments of the present invention will be described in detail by referring to the accompanying drawings.

[First exemplary embodiment]

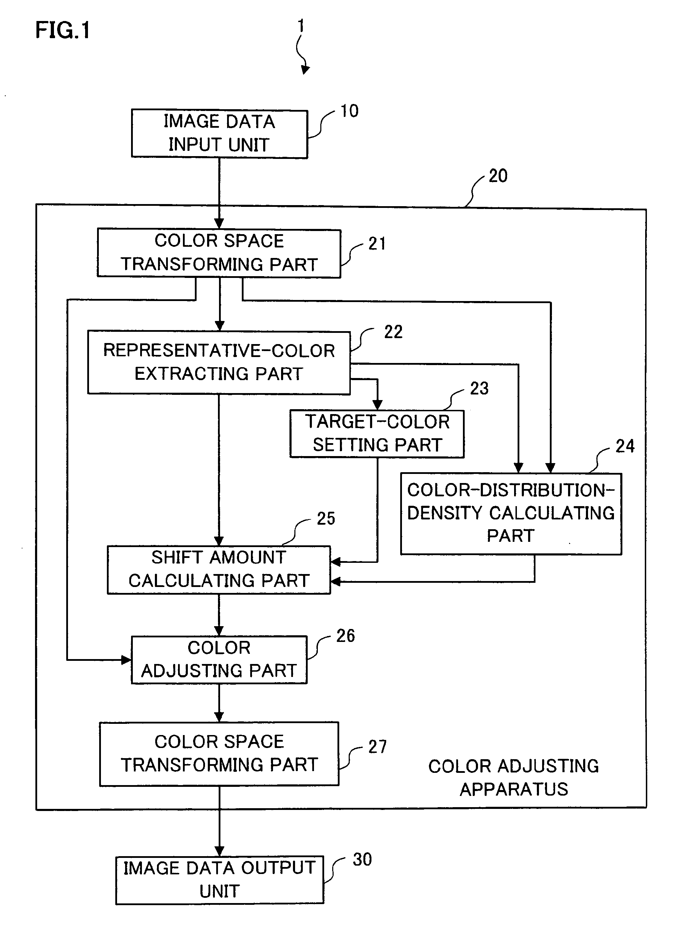

FIG. 1 is a block diagram showing a functional configuration of an image processing apparatus 1 including a color adjusting apparatus to which a first exemplary embodiment is applied. The image processing apparatus 1 shown in FIG. 1 includes an image data input unit 10, a color adjusting apparatus 20 performing a local color adjustment, and an image data output unit 30. Moreover, the color adjusting apparatus 20 includes a color space transforming part 21, a representative-color extracting part 22, a target-color setting part 23, a color-distribution-density calculating part 24, a shift amount calculating part 25, a color adjusting part 26 and a color space transforming part 27.

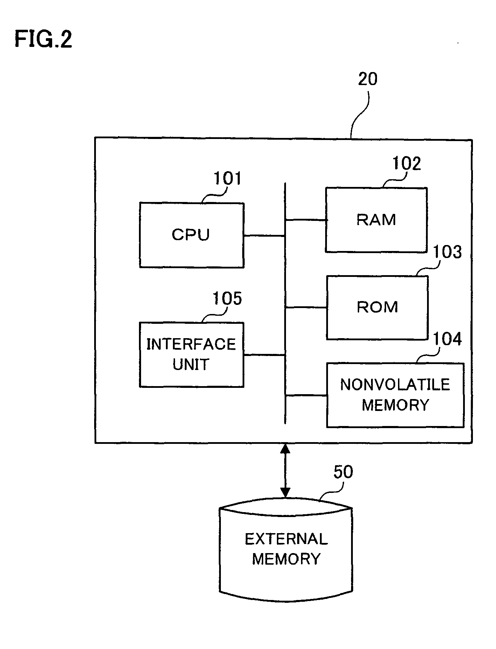

FIG. 2 is a block diagram showing an internal configuration of the color adjusting apparatus 20 of the first exemplary embodiment. As shown in FIG. 2, the color adjusting apparatus 20 includes a CPU 101, a RAM 102, a ROM 103, a nonvolatile memory 104, and an interface unit 105. The CPU 101 is one example of a computing unit that executes digital computing processing in accordance with a predetermined processing program while executing local color adjustment processing. The RAM 102 is used as a work memory and the like for the CPU 101. The ROM 103 is one example of a memory that stores the processing program and the like to be executed by the CPU 101. The nonvolatile memory 104 is any of a SRAM backed up by a battery, a flash memory and the like, which is rewritable and capable of holding data even without power supply. The interface unit 105 controls input and output of signals to and from each component connected to the color adjusting apparatus 20.

Meanwhile, an external memory 50 stores a processing program to be executed by the color adjusting apparatus 20. The color adjusting apparatus 20 of the first exemplary embodiment executes color signal transforming processing by reading this processing program from the external memory 50.

More specifically, the program implementing each of the functions of the aforementioned color space transforming part 21, representative-color extracting part 22, target-color setting part 23, color-distribution-density calculating part 24, shift amount calculating part 25, color adjusting part 26 and color space transforming part 27 is read from the external memory 50 into the ROM 103 inside the color adjusting apparatus 20. Then, the CPU 101 executes various kinds of processing in accordance with the program read into the ROM 103. This program is provided by, for example, loading, to the ROM 103, the program stored in a reserved area in a hard disk, a DVD-ROM or the like serving as the external memory 50. There is also an alternative providing way in which this program is stored in advance in the ROM 103 and thus provided.

Instead, if the color adjustment device 20 is provided with the rewritable ROM 103 such as an EEPROM, the color adjustment device 20 is firstly assembled and then only the program is provided and installed on the ROM 103. Otherwise, the program is transmitted to the color adjusting apparatus 20 via a network such as the Internet, and installed on the ROM 103 in the color adjusting apparatus 20.

The image data input unit 10 is one example of a color signal receiving part, and acquires image data expressed with a color signal, from a display device such as a liquid crystal display, an image scanning apparatus such as a scanner, and the like. Usable types of color signals constituting image data include a device-dependent type such as device RGB or CMYK, a device-independent type such as sRGB and the like. Then, the image data input unit 10 transmits the obtained image data to the color adjusting apparatus 20.

In the color adjusting apparatus 20, the color space transforming part 21 acquires the image data from the image data input unit 10. Then, the color space transforming part 21 transforms the obtained image data into color signals in a luminance color-difference space such as the sYCbCr color space, color signals in the L*a*b* color space or the like, for example. The obtained color signals are transmitted from the color space transforming part 21 to the representative-color extracting part 22, the color-distribution-density calculating part 24 and the color adjusting part 26.

The foregoing color space transforming part 21 may transform the image data into color signals in a color space used in each of functional units of the representative-color extracting part 22, the color-distribution-density calculating part 24 and the color adjusting part 26, which units are hereinafter described. For example, if image data in sRGB is inputted to the image data input unit 10, and then is used as data in sRGB by the representative-color extracting part 22, the image data may be transmitted without undergoing the color conversion.

The representative-color extracting part 22 executes processing of extracting a representative point (a representative color), which is to be adjusted, from color coordinate points in the color signal transmitted from the color space transforming part 21. For example, if image data inputted to the image data input unit 10 is based on a person photo image in which a person is photographed, the representative-color extracting part 22 extracts, as a representative color, a representative point of the skin color of the person.

Here, a description is given for one example of processing executed by the representative-color extracting part 22. For example, the representative-color extracting part 22 previously stores predetermined color component data as the representative color of a color to be adjusted, with respect to the color to be adjusted. If the color designated as a color to be adjusted is a human skin color, the predetermined color component data for the human skin color is stored as the representative color in advance. Then, a region in a predetermined particular range including the representative color as the center is set as a color region to be adjusted (also called an "adjustment-target region" below). Moreover, the representative-color extracting part 22 extracts pixels included in the set adjustment-target region, from the color signals (color component data of every pixel) acquired from the color space transforming part 21, and then stores the color component data (Y, Cb, Cr) on the pixels in the adjustment-target region. In this way or the like, the representative color and the adjustment-target region are automatically extracted.

Instead, the representative-color extracting part 22 may be configured to set, as the representative color, a color coordinate point manually extracted by a user with a certain color adjustment software application set in the representative-color extracting part 22.

Incidentally, the method of extracting the adjustment target representative color is not limited to those described above, and any method may be used.

Thereafter, the representative-color extracting part 22 transmits the color component data of the extracted representative color, to the target-color setting part 23. Moreover, the representative-color extracting part 22 transmits the color component data on the pixels included in the adjustment-target region, to the color-distribution-density calculating part 24 and the shift amount calculating part 25.

The target-color setting part 23 executes processing of setting a color coordinate point (target color) targeted for adjustment, in accordance with the representative color extracted by the representative-color extracting part 22.

Here, one example of the processing executed by the target-color setting part 23 is described. For example, color regions corresponding to various hues are set in advance in the target-color setting part 23. Upon receipt of the color component data of the representative color from the representative-color extracting part 22, the target-color setting part 23 extracts the color region corresponding to the obtained color component data of the representative color, from the color regions set in advance. Then, the target-color setting part 23 figures out the average value of each of the color components of the color component data included in the extracted color region, and sets, as the target color, the color coordinate point indicated by the obtained average values of the color component data of all of the respective color components. In this case, a weighted average of each of the color components may be calculated by assigning a certain weight to the color component data included in the extracted color region, and then the color coordinate point indicated by the weighted average values of all the color components may be set as the target color. In this way or the like, the target color is automatically set.

Instead, the target-color setting part 23 may be configured to set, as the target color, a color manually set by a user with a certain color adjustment software application set in the target-color setting part 23. Otherwise, the target-color setting part 23 may also be configured to set a predetermined absolute target color.

Incidentally, the method of setting the target color is not limited to those described above, and any method may be used.

Thereafter, the target-color setting part 23 transmits the color component data on the set target color to the shift amount calculating part 25.

The color-distribution-density calculating part 24 is one example of a distribution density calculating part, and calculates the distribution density of the color coordinate point existing around the representative color extracted by the representative-color extracting part 22. More specifically, from the representative-color extracting part 22, the color-distribution-density calculating part 24 acquires, for example, the color component data (Y, Cb, Cr) in the luminance color-difference space on the pixels (also called "adjustment-target pixels" below) included in the adjustment-target region. Then, the color-distribution-density calculating part 24 extracts a hue vector (Cb, Cr) from the color component data (Y, Cb, Cr) of each of the adjustment-target pixels. Thereafter, the color-distribution-density calculating part 24 calculates the distribution density (histogram) of the hue vectors (Cb, Cr) in a CbCr plane that is a two-dimensional plane.

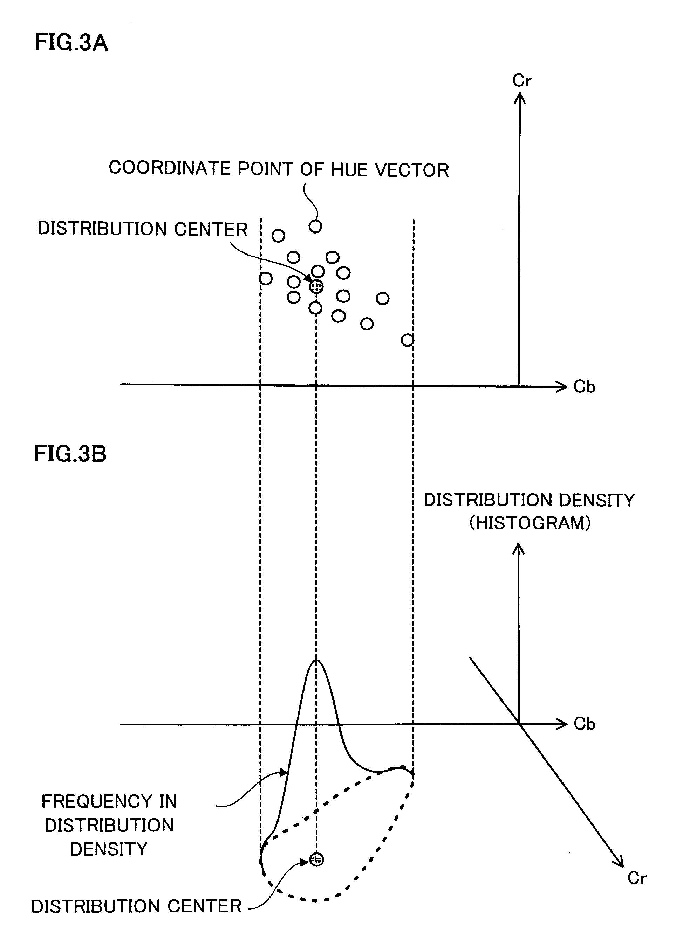

FIGs. 3A and 3B are diagrams showing one example of the distribution density (histogram) calculated by the color-distribution-density calculating part 24. FIG. 3A shows the distribution state of the hue vectors (Cb, Cr) of the adjustment-target pixels in the CbCr plane. FIG. 3B shows the frequency in the distribution density of the hue vectors (Cb, Cr) in the CbCr plane. In this description, the place in the CbCr plane representing the maximum frequency in the distribution density is referred to as "the distribution center."

The color-distribution-density calculating part 24 calculates the distribution density of the hue vectors (Cb, Cr) in the CbCr plane related to the adjustment-target pixels, as shown in FIG. 3B. Then, the color-distribution-density calculating part 24 outputs the data (distribution density data) on the calculated distribution density of the hue vectors (Cb, Cr), to the shift amount calculating part 25.

The shift amount calculating part 25 is one example of an adjustment range setting part, and acquires the color component data on the adjustment-target pixels from the representative-color extracting part 22, the color component data on the target color from the target-color setting part 23, and the distribution density data on the hue vectors (Cb, Cr) in the CbCr plane from the color-distribution-density calculating part 24. Then, by using the distribution density data on the hue vectors (Cb, Cr) acquired from the color-distribution-density calculating part 24, and the color component data of the target color acquired from the target-color setting part 23, the shift amount calculating part 25 calculates the shift amount of the color coordinate point (a coordinate point of the color component data (Y, Cb, Cr) in the YCbCr color space) of each of the adjustment-target pixels obtained from the representative-color extracting part 22. In this description, "the shift amount of the color coordinate point" denotes a shift distance (Euclidean distance) by which the color coordinate point of each of the adjustment-target pixels is shifted in the YCbCr color space.

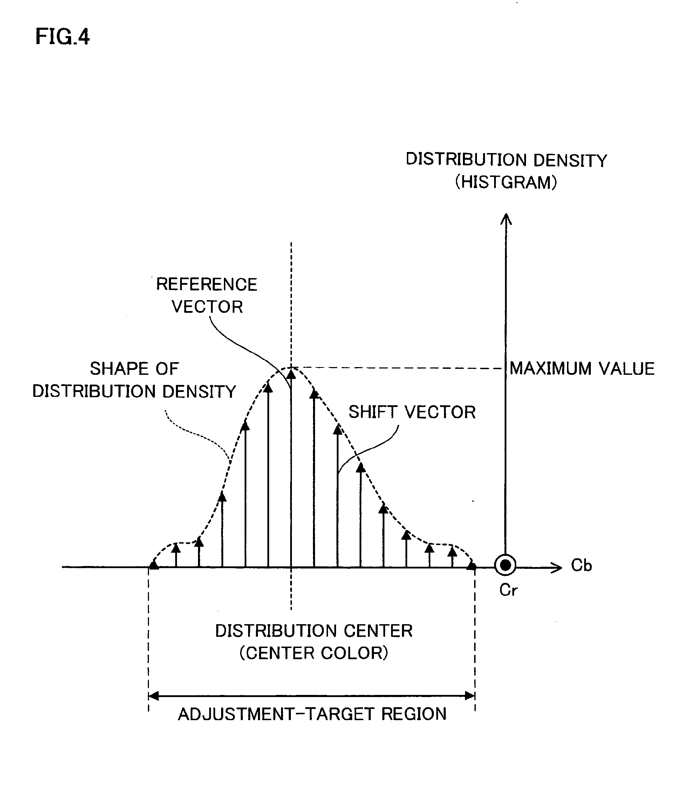

Here, a description is provided for a method of calculating the shift amount of a coordinate point in the shift amount calculating part 25. FIG. 4 is a diagram for explaining the shift amounts of color coordinate points of the adjustment-target pixels calculated by the shift amount calculating part 25. As shown in FIG. 4, the shift amount calculating part 25 calculates the shift amounts of the color coordinate points (hereinafter, also called "adjustment-target colors") of the adjustment-target pixels, in association with the frequency in the distribution density of the hue vectors (Cb, Cr).

Precisely, the shift amount calculating part 25 firstly sets, as the maximum shift amount, a shift amount of the color coordinate point existing closest to "the distribution center" having the maximum frequency in the distribution density. More precisely, the shift amount calculating part 25 calculates the shift amount Do of the center color such that the color coordinate point (hereinafter, also called "the center color") existing closest to "the distribution center" should be transformed into the color coordinate point of the target color set by the target-color setting part 23. This shift amount Do of the center color is used as the size (maximum shift amount) of a "reference vector," which will be described later.

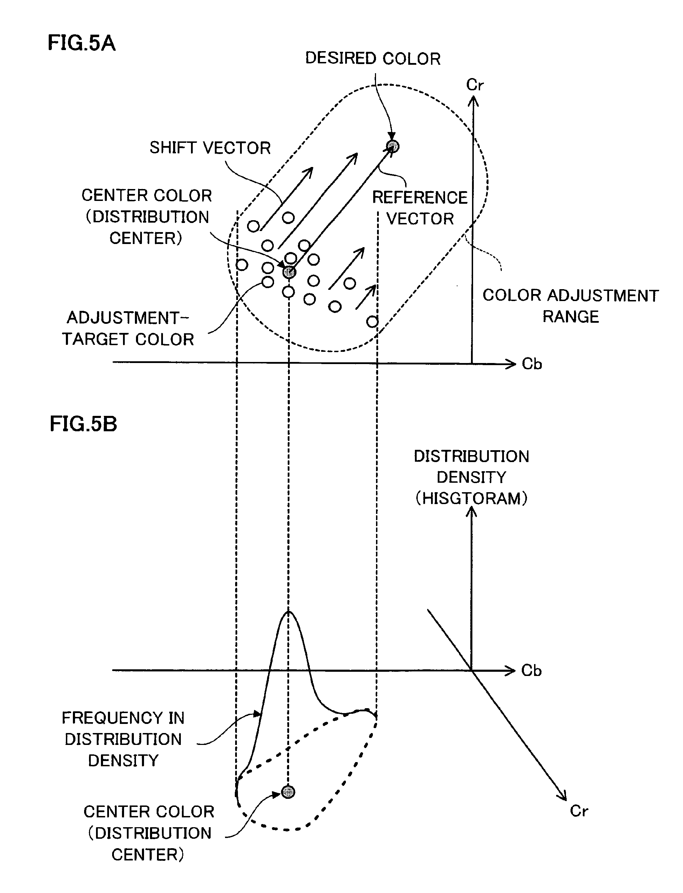

Incidentally, FIG. 4 and following FIGs. 5A and 5B are based on the assumption that the adjustment-target pixel (= the center color) representing "the distribution center" exists in the "the distribution center." In other words, there may be a case where no color coordinate point exists in "the distribution center" calculated by use of a particular one of the methods of calculating the distribution density of the hue vectors (Cb, Cr) (for example, a method of calculating the color coordinate points with higher resolution, or the like). For this reason, in the first exemplary embodiment, the color coordinate point existing closest to "the distribution center" is defined as "the center color." However, since the distribution density is generally calculated with resolution in the unit of the color coordinates, the color coordinate point is here assumed to exist in "the distribution center." In addition, since the shift amount calculating part 25 in the first exemplary embodiment sets, as the center color, the color coordinate point existing closest to "the distribution center," the center color may be or may not be identical with the representative color.

Moreover, in this description, the "reference vector" denotes a vector that shifts the color coordinate point from the center color to the target color. In addition, "a shift vector" denotes a vector that shifts the color coordinate point of each of the adjustment-target colors other than the center color existing in "the distribution center." The shift vector is configured to be parallel to the reference vector in the YCbCr color space. The size of each of the reference vector and the shift vectors represents the shift amount.

Subsequently, the shift amount calculating part 25 calculates the size (shift amount) of the shift vector that shifts the color coordinate point of each of the adjustment-target colors. At this time, for example, the shift amount calculating part 25 normalizes the frequency in the distribution density of the adjustment-target pixels with setting the maximum value of the frequency in the distribution density (the frequency of "the distribution center") as one (1). Thereafter, the shift amount calculating part 25 calculates the size of the shift vector of each of the adjustment-target colors by multiplying the size of the reference vector (maximum shift amount = $D_0$) by the normalized frequency in the distribution density. The normalized frequency in the distribution density is one example of a value representing the relative size of the distribution density.

Specifically, the size of the shift vector is calculated by use of the following equation (1) where $D_j$ denotes the size of the shift vector of the $j$-th adjustment-target color, $D_0$ denotes the size of the reference vector, and $p_j$ denotes the normalized frequency in the distribution density of the $j$-th adjustment-target color.

$$D_j = p_j \cdot D_0 \quad \ldots \quad (1)$$

In this way, the shift amount calculating part 25 uses the normalized frequency $p_j$ in the distribution density as a parameter to determine the size $D_j$ of the shift vector of the $j$-th adjustment-target color.

After that, to the color adjusting part 26, the shift amount calculating part 25 transmits, as the shift amount of each of the adjustment-target pixels, the size $D_0$ of the reference vector and the size $D_j$ of the shift vector calculated by use of the equation (1), in association with the adjustment-target pixel.

The color adjusting part 26 is one example of a color adjusting part, and acquires color signals in a YCb-Cr color space from the color space transforming part 21. The color signal acquired here is composed of color component data of each pixel. Moreover, the color adjusting part 26 acquires the shift amount of each of the adjustment-target pixels from the shift amount calculating part 25. Thereafter, the color adjusting part 26 executes processing of adjusting the color signals acquired from the color space transforming part 21, by using the shift amounts of the respective adjustment-target pixels acquired from the shift amount calculating part 25. More specifically, the color adjusting part 26 extracts the color signal of each of the pixels (adjustment-target pixels) having the shift amount calculated by the shift amount calculating part 25, from the color signals acquired from the color space transforming part 21. Thereafter, the color adjusting part 26 executes the adjustment processing of shifting the extracted color signal of each of the adjustment-target pixels, by use of the shift amount calculated by the shift amount calculating part 25.

FIGs. 5A and 5B are diagrams for explaining the adjustment processing for the color signals by use of the shift amounts acquired from the shift amount calculating part 25. FIG. 5A shows the reference vector and the shift vectors set on the basis of the shift amounts acquired from the shift amount calculating part 25, and FIG. 5B shows the frequency in the distribution density of the adjustment-target colors in the CbCr plane.

As shown in FIGs. 5A and 5B, on the basis of the shift amounts, the color adjusting part 26 sets the reference vector and the shift vectors for the respective color signals of the adjustment-target pixels having the shift amounts calculated by the shift amount calculating part 25. Then, the color adjusting part 26 shifts each of the color coordinate points of the color signals, in accordance with the set reference vector and shift vectors. In this way, an adjustment range in the YCbCr color space targeted for color adjustment by the color adjusting part 26 (hereinafter, also called "a color adjustment range") is automatically determined without having to be set in advance.

To be more precise, the shift amount calculating part 25 calculates the shift amounts for the respective color coordinate points (adjustment-target colors) having frequency values other than 0 in the distribution density in the adjustment-target region set by the representative-color extracting part 22, and then the color adjusting part 26 sets the reference vector and the shift vectors based on the shift amounts. Meanwhile, the shift amounts for the color coordinate points are set at 0 for an area having a frequency value of 0 in the distribution density inside the adjustment-target region and for an area outside the adjustment-target region. As a result, even when the distribution density of the adjustment-target colors forms a complicated shape (refer to FIGs. 3B and 5B), the color adjustment range is automatically determined based on the distribution density of the adjustment-target colors in the CbCr plane. In addition, this automatic determination of the color adjustment range also reduces the influence that the color adjustment makes on the colors other than the adjustment-target colors.

Here, one of generally-known methods of setting a color adjustment range is a method using a parameter. Precisely, in this method, a color adjustment range is defined by an area inside the color space set by a parameter, with, for example, the representative color used as a reference, and color signals inside the color adjustment range are adjusted in accordance with a certain set rule. With such a method, however, the size of the color adjustment range depends on the value of a set parameter, and accordingly the color adjustment range may be determined to have a large range in some cases or a small range in other cases.

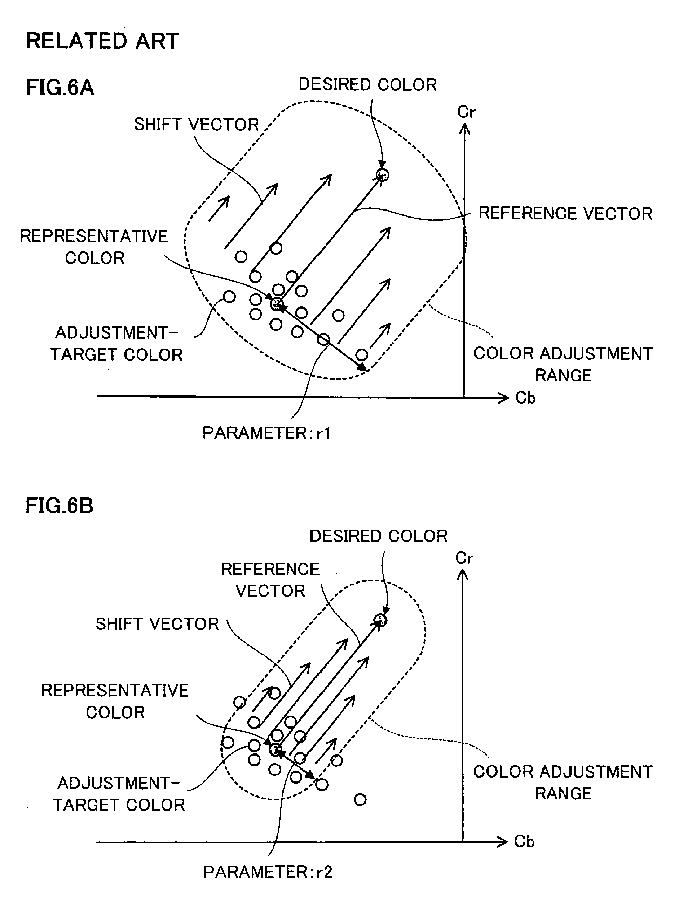

FIGs. 6A and 6B are diagrams for explaining the conventional method of setting a color adjustment range by use of a parameter. FIG. 6A shows a case where a parameter value is set at a value r1 larger than an appropriate value, while FIG. 6B shows a case where the parameter value is set at a value r2 smaller than the appropriate value. As shown in FIG. 6A, when the parameter value is set at the value r1 larger than the appropriate value, the color adjustment range thus determined is larger than a color region having colors that should be originally adjusted. As a result, colors other than a desired particular color (for example, a human skin color) are also changed at the same time, so that the reproducibility of each color is decreased in some cases. Instead, as shown in FIG. 6B, when the parameter value is set at the value r2 smaller than the appropriate value, the color adjustment range thus determined is smaller than the color region having colors that should be originally adjusted. As a result, in this case, a desired particular color is not adjusted sufficiently in some cases.

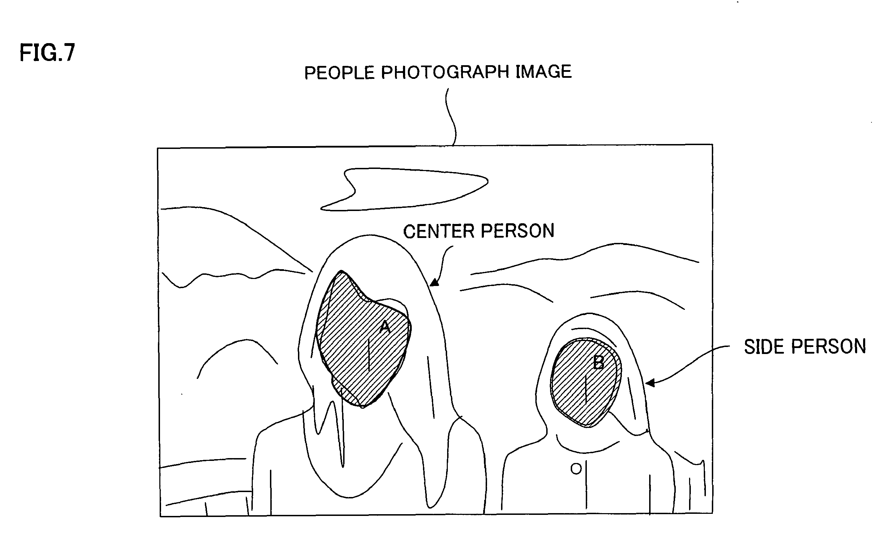

Moreover, in a people photograph image having two or more people photographed therein, the skin colors vary among the individuals. Even when two or more people having similar skin colors are photographed, the skin colors vary depending on the illuminance levels of the standing positions of the respective people or the like. FIG. 7 is a view showing one example of a people photograph image having two or more people photographed therein. As shown in FIG. 7, a difference between the individuals, a difference between the illuminance levels of the standing positions and the like make the skin color of a face area A of a center person different from the skin color of a face area B of a side person. Accordingly, even if the skin colors are adjusted by determining the representative color, the skin colors of the respective people, who are the photographic subjects, are not always adjusted equally to the target color.

In contrast, the color adjusting apparatus 20 in the first exemplary embodiment calculates the shift amount of each of the adjustment-target colors in association with the frequency in the distribution density of the hue vectors (Cb, Cr) , and adjusts each of the adjustment-target colors to shift color coordinate points according to the calculated shift amount. Through such adjustment, the adjustment-target color having a high frequency in the distribution density is desirably adjusted to the target color or a color close to the target color. On the other hand, the adjustment-target color having a low frequency in the distribution density is adjusted only to a small extent. In this way, the color adjustment range is set to be suitable for characteristics of the distribution of adjustment-target colors included in an image to be adjusted, and thereby color adjustment is made suitably for the characteristics of the distribution of adjustment-target colors included in the image to be adjusted.

Note that, in this case, the color adjusting part 26 additionally applies one rule for shifting an adjustment-target color included in the adjustment-target region, toward the target color. Specifically, in order to prevent an occurrence of grey-level inversion or color inversion, this rule regulates the transformation of color coordinate points such that color coordinate points existing on each of the reference vector and the same shift vectors should be arranged in the same order before and after the shift toward the target color.

Thereafter, the color signals adjusted through the processing by the color adjusting part 26 are transmitted to the color space transforming part 27. Then, the color space transforming part 27 transforms the adjusted color signals in the YCbCr color space into the color signals in the sRGB color space, and transmits the resultant color signals in the sRGB color space to the image data output unit 30.

The image data output unit 30 outputs the image data to the outside of the image processing apparatus 1. More specifically, the image data composed of the color signals already processed for color adjustment by the color adjusting apparatus 20 are outputted to an image forming engine unit, which is one example of a printing unit mounted on an image forming apparatus such as a color printer. In other words, the image processing apparatus 1 of the first exemplary embodiment may be configured as a functional unit of an image forming apparatus.

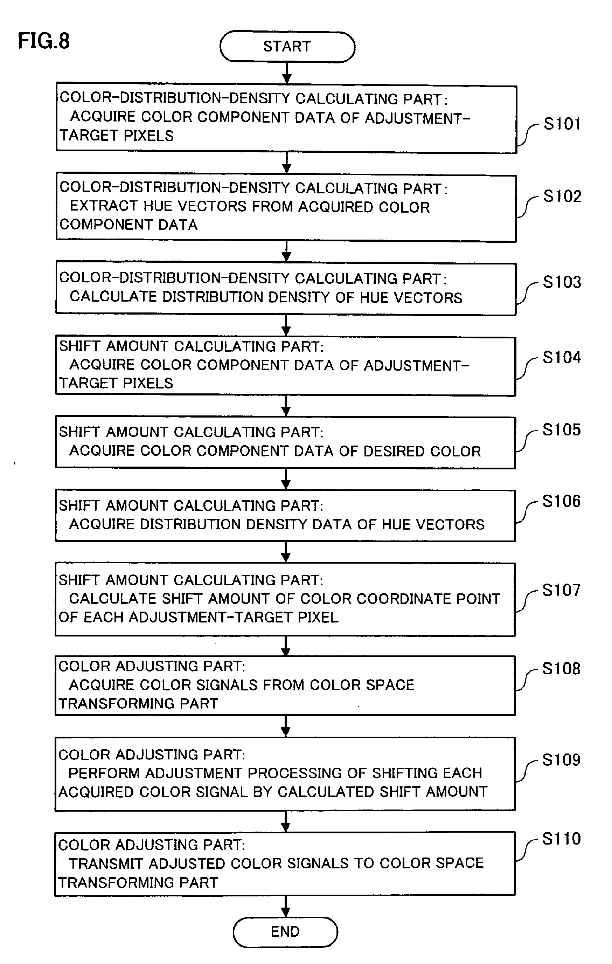

FIG. 8 is a flowchart showing one example of the procedure of color signal adjustment processing executed by the color-distribution-density calculating part 24, the shift amount calculating part 25 and the color adjusting part 26 in the color adjusting apparatus 20 of the first exemplary embodiment. As shown in FIG. 8, from the representative-color extracting part 22, the color-distribution-density calculating part 24 acquires the color component data of pixels (adjustment-target pixels) included in the adjustment-target region (S101).

Then, the color-distribution-density calculating part 24 extracts the hue vector (Cb, Cr) from the color component data (Y, Cb, Cr) of each of the adjustment-target pixels (S102). Moreover, the color-distribution-density calculating part 24 calculates the distribution density (histogram) of the hue vectors (Cb, Cr) in the CbCr plane, which is a two-dimensional plane (S103).

Thereafter, the shift amount calculating part 25 acquires the color component data of the adjustment-target pixels from the representative-color extracting part 22 (S104), and also acquires the color component data of the target color from the target-color setting part 23 (S105). The shift amount calculating part 25 further acquires the distribution density data of the hue vectors (Cb, Cr) from the color-distribution-density calculating part 24 (S106). Thereafter, on the basis of the distribution density data of the hue vectors (Cb, Cr) acquired from the color-distribution-density calculating part 24, and the color component data of the target color acquired from the target-color setting part 23, the shift amount calculating part 25 calculates the shift amount of the color coordinate point of each of the adjustment-target pixels acquired from the representative-color extracting part 22 (S107) .

The color adjusting part 26 acquires the color signals from the color space transforming part 21 (S108) , and performs the adjustment processing of shifting each of the color signals acquired from the color space transforming part 21, by the shift amount calculated by the shift amount calculating part 25 (S109). The color signals thus processed for adjustment are transmitted from the color adjusting part 26 to the color space transforming part 27 (S110).

As described above, the color adjusting apparatus 20 in the first exemplary embodiment calculates the shift amount of each of the color coordinate points in the adjustment-target region, on the basis of, for example, the two-dimensional distribution density (histogram) of the hue vectors (Cb, Cr) in the CbCr plane calculated by the color-distribution-density calculating part 24. Instead of such processing, a three-dimensional distribution density of color coordinate points (Y, Cb, Cr) in the YCbCr color space may be calculated at first, and then the shift amount of each of the color coordinate points may be calculated on the basis of the calculated three-dimensional distribution density. Otherwise, one-dimensional distribution density of the color coordinate points (Y, Cb, Cr) may be calculated, for example, in terms of the Y (brightness) axis at first, and then the shift amount of each of the color coordinate points may be calculated on the basis of the calculated one-dimensional distribution density of the brightness (Y).

Moreover, instead of the YCbCr color space used in the first exemplary embodiment, various kinds of color spaces may be used as the color space in which the distribution density of color coordinate points is calculated. For example, employable color spaces include not only a device-independent color space such as the L*a*b* color space, but also a device-dependent color space such as the RGB color space and the CMYK color space.

In this way, in the color adjusting apparatus 20 of the first exemplary embodiment, the color-distribution-density calculating part 24 is configured to calculate any one of the three kinds of distribution densities of the color coordinate points, in terms of the one-dimensional axis, two-dimensional plane and three-dimensional space, within the adjustment-target region in a certain color space supported by the color adjusting apparatus 20. Moreover, the shift amount calculating part 25 is configured to calculate the shift amount for each of the color signals on the basis of any one of the one-dimensional to three-dimensional distribution densities calculated by the color-distribution-density calculating part 24.

As described above, the color adjusting apparatus 20 in the first exemplary embodiment calculates the shift amount of the color coordinate point of each of the adjustment-target pixels in a certain color space supported by the color adjusting apparatus 20, and this calculation is based on any one of the one-dimensional to three dimensional distribution densities of color coordinate points of the adjustment-target pixels. The color signals transformed by the color space transforming part 21 are adjusted so as to be shifted by the calculated shift amount. In this way, the color adjustment range in the color space supported by the color adjusting apparatus 20 is automatically set.

[Second exemplary embodiment]

In the first exemplary embodiment, the description has been provided, as one example, for the color adjusting apparatus 20 configured to shift the color coordinate points on the basis of the two-dimensional distribution density of the color coordinate points (Y, Cb, Cr) of the adjustment-target pixels in the YCbCr color space. In the second exemplary embodiment, descriptions will be provided for a color adjusting apparatus 20 configured to calculate the shift amount of each of color coordinate points not only by using, for example, the two-dimensional distribution density in the YCbCr color space of the color coordinate points (Y, Cb, Cr) of the adjustment-target pixels, but also by assigning a weight according to the distance from the reference vector, and to shift the color coordinate point in accordance with the calculated shift amount. Incidentally, the same components as those in the first exemplary embodiment will be described with the same reference numerals, and the detailed description thereof will be omitted in the second exemplary embodiment.

A description is given for processing of calculating the shift amount of the color coordinate point of each of the adjustment-target pixels in the shift amount calculating part 25 of the color adjusting apparatus 20 of the second exemplary embodiment. The shift amount calculating part 25 of the second exemplary embodiment, which serves as one example of an adjustment range setting part, calculates the shift amount of the color coordinate point of each of the adjustment-target pixels obtained from the representative-color extracting part 22, by using a weight set according to a distance from the reference vector in addition to the distribution density data of the hue vector (Cb, Cr) acquired from the color-distribution-density calculating part 24.

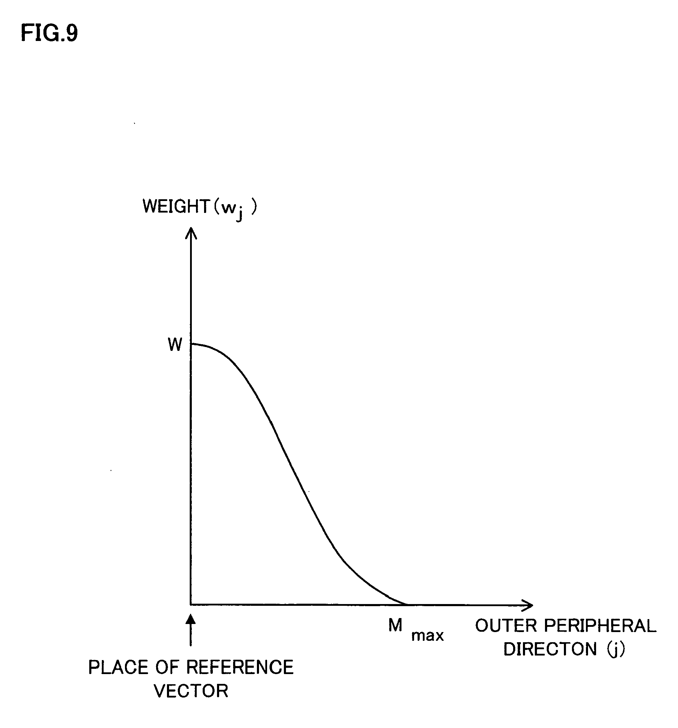

FIG. 9 is a diagram showing one example of a characteristic of a weight $w_j$ used in a shift amount calculating part 25. As shown in FIG. 9, the weight $w_j$ of the second exemplary embodiment is set to take the maximum value W at the reference vector that makes the color coordinate point shifted from the center color to the target color, and to take a smaller value as the color coordinate point exists farther from the reference vector and closer to the outer peripheral of the adjustment-target region. Moreover, the weight $w_j$ is set to 0 in a region where the Euclidean distance from the reference vector is equal to or greater than a certain value Mmax.

Then, the shift amount calculating part 25 calculates the size of the shift vector by using the following equation (2), where $D_j$ denotes the size of the shift vector of the $j$-th adjustment-target color, $D_0$ denotes the size of the reference vector, $p_j$ denotes the normalized frequency in the distribution density of the $j$-th adjustment-target color, and $w_j$ denotes a weight assigned to the $j$-th adjustment-target color.

$$D_j = w_j \cdot p_j \cdot D_0 \quad \cdots \ (2)$$

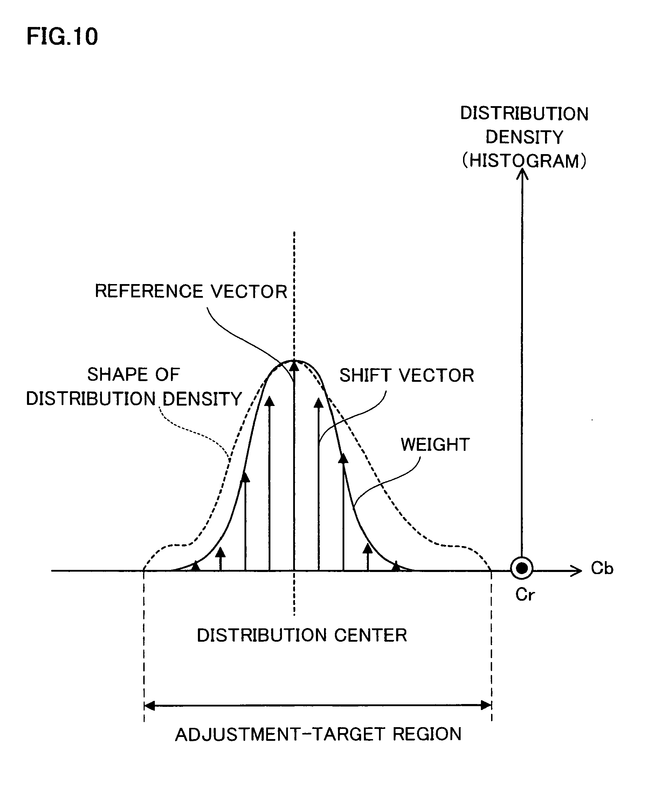

Here, FIG. 10 is a diagram for explaining one example of the shift amounts of the adjustment-target colors calculated by the shift amount calculating part 25 in the second exemplary embodiment. As shown in FIG. 10, the shift amount calculating part 25 calculates the shift amounts of the adjustment-target colors by using the foregoing equation (2). Thereby, the shift amount of the adjustment-target color is set so as to receive less influence of the frequency $p_j$ in the distribution density, as the adjustment-target color has a larger Euclidean distance from the reference vector. In addition, in the area having the Euclidean distance from the reference vector that is equal to or greater than the certain value Mmax, the shift amount of the adjustment-target color is set to 0 regardless of how large a value taken by the frequency $p_j$ in the distribution density is.

As a result, a shift vector having a smaller shift amount is set for a color coordinate point located closer to the outer peripheral of the adjustment-target region. Moreover, any color adjustment is not made in an area where the distance from the reference vector is equal to or greater than the certain value Mmax. Hence, the color continuity is maintained around the outer peripheral of the adjustment-target region. Incidentally, "the outer peripheral of the adjustment-target region" denotes a boundary between the inside and the outside of the adjustment-target region in the YCbCr color space.

A fixed value derived from the empirical rule may be used as the weight $w_j$ for this case. Additionally, the weight $w_j$ may also be set according to the distribution density of the color coordinate points of the adjustment-target pixels. For example, the color adjusting apparatus 20 may be configured to set an area where the weight $w_j$ is set to a value larger than 0, i.e., the Euclidean distance Mmax from the reference vector, according to the distribution density, when setting the weight $w_j$. Furthermore, the color adjusting apparatus 20 may be also configured to change the Euclidean distance Mmax from the reference vector regardless of the distribution density. With this configuration, the upper limit of the color adjustment range is determined according to the characteristics of an adjustment-target image, while the color adjustment range is automatically set according to the distribution density of the color coordinate points of the adjustment-target pixels. Thus, the Euclidean distance Mmax set here functions as a parameter for setting such a color adjustment range within a space region with a particular shape formed in, for example, the YCbCr color space (for instance, a space region with a capsular shape) while the color adjustment range is set according to the distribution density of the color coordinate points of the adjustment-target pixels.

Moreover, in order to flexibly suit to the characteristic of the adjustment-target image, the size $D_j$ of each shift vector may be calculated with multiple weights $W_{ij}$ ($i$ = 1 to n, n is an integer) assigned. In other words, the size $D_j$ of the shift vector of the $j$-th adjustment-target color may be calculated by use of the following equation (3).

$$D_j = \prod_i w_{ij} \cdot p_j \cdot D_o \quad \cdots \ (3)$$

On the other hand, in some cases, a particular adjustment-target image needs color adjustment to be made also for color coordinate points existing near the outer peripheral of a color-adjustment image even if the continuity of the colors around the outer peripheral of the adjustment-target region is slightly damaged. In order to deal with such a case, the shift amount calculating part 25 may calculate the shift amount of the color coordinate point of each of the adjustment-target pixels acquired from the representative-color extracting part 22 so that the frequency $p_j$ in the distribution density has an influence on even an area around the outer peripheral of the adjustment-target region. This shift amount calculation is carried out by using the arithmetic average value of the frequency $p_j$ in the distribution density of the color coordinate points of the adjustment-target pixels, and the weight $w_j$ set according to the distance from the reference vector. In short, the shift amount calculating part 25 may calculate the size $D_j$ of the shift vector of the $j$-th adjustment-target color by use of the following equation (4).

$$D_j = \frac{p_j + w_j}{2} \cdot D_0 \quad \cdots (4)$$

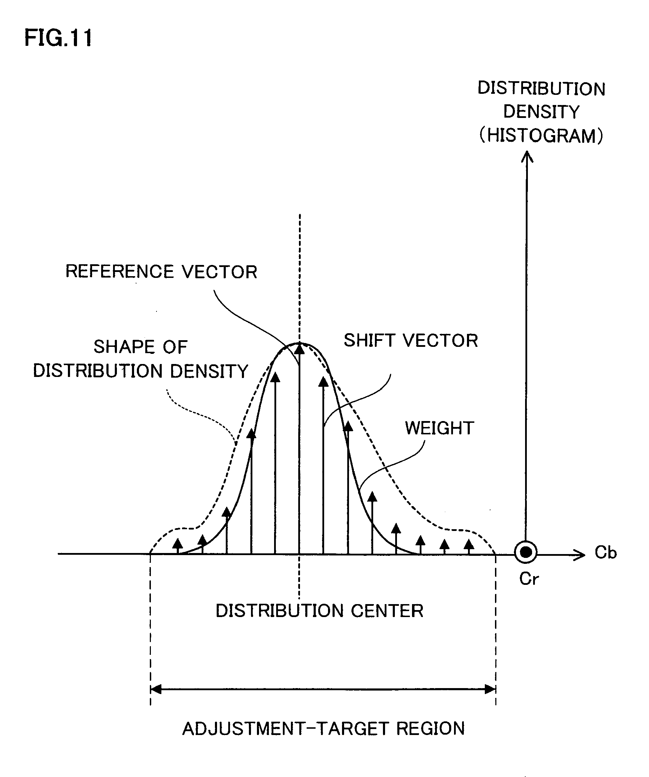

FIG. 11 is a diagram for explaining one example of the shift amounts of the adjustment-target colors calculated by the shift amount calculating part 25 of the second exemplary embodiment. As shown in FIG. 11, if the shift amount calculating part 25 calculates the shift amounts of the adjustment-target colors by use of the aforementioned equation (4), the frequency $p_j$ in the distribution density has an influence on even an area around the outer peripheral of the adjustment-target region with respect to the shift amounts of the adjustment-target colors. In this way, a range suitable for the characteristic of an adjustment-target image is set as the color adjustment range.

Moreover, for the color adjustment near the outer peripheral of the adjustment-target region, the size $D_j$ of the shift vector may be calculated with multiple weights $W_{ij}$ ($i$ = 1 to n, n is an integer) assigned in order to minutely adjust the influence of the frequency $p_j$ in the distribution density near the outer peripheral of the adjustment-target region. In short, the size $D_j$ of the shift vector of the j-th adjustment-target color may be calculated by use of the following equation (5).

$$D_j = \frac{p_j + \sum_i w_{ij}}{1+i} \cdot D_o \qquad \ldots \quad (5)$$

As described above, in calculating the shift amount of the color coordinate point of each of the adjustment-target pixels acquired from the representative-color extracting part 22, the shift amount calculating part 25 of the second exemplary embodiment uses not only the distribution density data of the hue vectors (Cb, Cr) acquired from the color-distribution-density calculating part 24, but also the weight $w_j$ set in proportion to the distance from the reference vector. Thus, the color adjustment range is adjusted according to the characteristic of an adjustment-target image.

Note that the shift amounts calculated for the adjustment-target pixels by the shift amount calculating part 25 are transmitted to the color adjusting part 26, as is the case with the first exemplary embodiment. Then, the color adjusting part 26 performs processing of adjusting color signals acquired from the color space transforming part 21, by use of the shift amounts for the respective adjustment-target pixels acquired from the shift amount calculating part 25.

The color signals adjusted through the processing by the color adjusting part 26 are transmitted to the image data output unit 30 after the color space transforming part 27 transforms the color signals in the YCbCr color space into the color signals in the sRGB color space. Then, the image data output unit 30 outputs the image data to, for example, an image forming engine unit that is installed in the color image forming apparatus or the like.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

**Claims**

1. A color adjusting apparatus comprising:

   a color signal receiving part that receives input of color signals;
   a distribution density calculating part that calculates a distribution density in a certain color space concerning the color signals received by the color signal receiving part;
   an adjustment range setting part that sets an adjustment range where the color signals are adjusted in the color space on the basis of the distribution density calculated by the distribution density calculating part; and
   a color adjusting part that adjusts the color signals included in the adjustment range set by the adjustment range setting part.

2. The color adjusting apparatus according to claim 1, wherein
   the adjustment range setting part calculates shift amounts for the color signals in the color space, on the basis of the distribution density calculated by the distribution density calculating part, and sets the adjustment range based on the calculated shift amounts, and
   the color adjusting part adjusts the color signals according to the shift amounts calculated by the adjustment range setting part.

3. The color adjusting apparatus according to claim 2, wherein the adjustment range setting part sets, as a center color, a color coordinate point existing closest to a distribution center, and calculates the shift amounts such that the shift amount for shifting the center color to a target color is maximized, the distribution center having a maximum value of the distribution density calculated by the distribution density calculating part, and the target color being a target for adjusting the color signals by the color adjusting part.

4. The color adjusting apparatus according to claim 3, wherein the adjustment range setting part calculates, based on the shift amount of the center color and the distribution density, the shift amounts respectively for shifting the color signals other than the center color included in the adjustment range toward the target color.

5. The color adjusting apparatus according to claim 3, wherein the adjustment range setting part multiplies the shift amount of the center color included in the adjustment range by a value indicative of a relative magnitude in the distribution density and a weight assigned to the distribution density, and calculates the shift amounts respectively for shifting the color signals other than the center color included in the adjustment range toward the target color.

6. The color adjusting apparatus according to claim 5, wherein the adjustment range setting part uses the weight having a weight value set to zero for an area beyond a predetermined Euclidean distance from the center color in the color space.

7. The color adjusting apparatus according to claim 6, wherein the adjustment range setting part is configured so as to be capable of changing the Euclidean distance from the center color.

8. An image forming apparatus comprising:

a color signal receiving part that receives input of color signals;
a distribution density calculating part that calculates a distribution density in a certain color space concerning the color signals received by the color signal receiving part;
an adjustment range setting part that sets an adjustment range where the color signals are adjusted in the color space on the basis of the distribution density calculated by the distribution density calculating part;
a color adjusting part that adjusts the color signals included in the adjustment range set by the adjustment range setting part; and
a printing unit that prints the color signals adjusted by the color adjusting part.

9. A color adjusting method comprising:

receiving input of color signals;
calculating a distribution density in a certain color space concerning the received color signals;
setting an adjustment range where the color signals are adjusted in the color space on the basis of the calculated distribution density; and
adjusting the color signals included in the set adjustment range.

10. A program causing a computer to execute a process for color adjustment, the process comprising:

receiving input of color signals;
calculating a distribution density in a certain color space concerning the received color signals;
setting an adjustment range where the color signals are adjusted in the color space on the basis of the calculated distribution density; and
adjusting the color signals included in the set adjustment range.

11. The program according to claim 10, wherein
the process of setting the adjustment range calculates shift amounts for the color signals in the color space based on the calculated distribution density, and sets the adjustment range based on the calculated shift amounts, and
the process of adjusting the color signals adjusts the color signals according to the calculated shift amounts.

12. The program according to claim 11, wherein the process of setting the adjustment range sets, as a center color, a color coordinate point existing closest to a distribution center having a maximum value of the calculated distribution density, calculates the shift amounts such that the shift amount for shifting the center color to a target color being a target for adjusting the color signals is maximized, and calculates the shift amounts respectively for shifting the color signals other than the center color included in the adjustment range toward the target color, based on the shift amount of the center color and the distribution density.

13. The program according to claim 12, wherein the process of setting the adjustment range multiplies the shift amount of the center color included in the adjustment range by a value indicative of a relative magnitude in the distribution density and a weight assigned to the distribution density, and calculates the shift amounts respectively for shifting the color signals other than the center color included in the adjustment range toward the target color.

14. The program according to claim 13, wherein the process of setting the adjustment range calculates the shift amounts, by using the weight having a weight value set to zero for an area beyond a predetermined Euclidean distance from the center color in the color space.

15. The program according to claim 14, the process further comprising changing the predetermined Euclidean distance from the center color, the Euclidean distance defining an area where the weight value is set to zero.

**FIG.1**

1

IMAGE DATA
INPUT UNIT — 10

20

COLOR SPACE
TRANSFORMING PART — 21

REPRESENTATIVE-COLOR
EXTRACTING PART — 22

TARGET-COLOR
SETTING PART — 23

COLOR-DISTRIBUTION-
DENSITY CALCULATING
PART — 24

SHIFT AMOUNT
CALCULATING PART — 25

COLOR
ADJUSTING PART — 26

COLOR SPACE
TRANSFORMING PART — 27

COLOR ADJUSTING
APPARATUS

IMAGE DATA OUTPUT
UNIT — 30

FIG.2

## FIG.3A

COORDINATE POINT OF HUE VECTOR

DISTRIBUTION CENTER

Cr

Cb

## FIG.3B

DISTRIBUTION DENSITY
(HISTOGRAM)

Cb

FREQUENCY IN
DISTRIBUTION
DENSITY

DISTRIBUTION CENTER

Cr

FIG.4

**FIG.5A**

DESIRED COLOR

SHIFT VECTOR

CENTER COLOR
(DISTRIBUTION
CENTER)

REFERENCE
VECTOR

Cr

ADJUSTMENT-
TARGET COLOR

COLOR ADJUSTMENT
RANGE

Cb

**FIG.5B**

DISTRIBUTION
DENSITY
(HISGTORAM)

Cb

FREQUENCY IN
DISTRIBUTION
DENSITY

Cr

CENTER COLOR
(DISTRIBUTION
CENTER)

# RELATED ART

## FIG.6A

DESIRED COLOR

SHIFT VECTOR

REPRESENTATIVE
COLOR

ADJUSTMENT-
TARGET COLOR

Cr

REFERENCE VECTOR

COLOR ADJUSTMENT
RANGE

Cb

PARAMETER:r1

## FIG.6B

DESIRED COLOR

REFERENCE
VECTOR

SHIFT VECTOR

REPRESENTATIVE
COLOR

ADJUSTMENT-
TARGET COLOR

Cr

COLOR ADJUSTMENT
RANGE

Cb

PARAMETER:r2

FIG.7

PEOPLE PHOTOGRAPH IMAGE

CENTER PERSON

SIDE PERSON

**FIG.8**

START

↓

COLOR-DISTRIBUTION-DENSITY CALCULATING PART:
ACQUIRE COLOR COMPONENT DATA OF ADJUSTMENT-
TARGET PIXELS — S101

↓

COLOR-DISTRIBUTION-DENSITY CALCULATING PART:
EXTRACT HUE VECTORS FROM ACQUIRED COLOR
COMPONENT DATA — S102

↓

COLOR-DISTRIBUTION-DENSITY CALCULATING PART:
CALCULATE DISTRIBUTION DENSITY OF HUE VECTORS — S103

↓

SHIFT AMOUNT CALCULATING PART:
ACQUIRE COLOR COMPONENT DATA OF ADJUSTMENT-
TARGET PIXELS — S104

↓

SHIFT AMOUNT CALCULATING PART:
ACQUIRE COLOR COMPONENT DATA OF DESIRED COLOR — S105

↓

SHIFT AMOUNT CALCULATING PART:
ACQUIRE DISTRIBUTION DENSITY DATA OF HUE VECTORS — S106

↓

SHIFT AMOUNT CALCULATING PART:
CALCULATE SHIFT AMOUNT OF COLOR COORDINATE POINT
OF EACH ADJUSTMENT-TARGET PIXEL — S107

↓

COLOR ADJUSTING PART:
ACQUIRE COLOR SIGNALS FROM COLOR SPACE
TRANSFORMING PART — S108

↓

COLOR ADJUSTING PART:
PERFORM ADJUSTMENT PROCESSING OF SHIFTING EACH
ACQUIRED COLOR SIGNAL BY CALCULATED SHIFT AMOUNT — S109

↓

COLOR ADJUSTING PART:
TRANSMIT ADJUSTED COLOR SIGNALS TO COLOR SPACE
TRANSFORMING PART — S110

↓

END

# FIG.9

# FIG.10

DISTRIBUTION
DENSITY
(HISTOGRAM)

REFERENCE VECTOR

SHAPE OF
DISTRIBUTION DENSITY

SHIFT VECTOR

WEIGHT

Cb

Cr

DISTRIBUTION CENTER

ADJUSTMENT-TARGET REGION

# FIG.11

DISTRIBUTION
DENSITY
(HISTOGRAM)

REFERENCE VECTOR

SHIFT VECTOR

SHAPE OF
DISTRIBUTION DENSITY

WEIGHT

$Cb$

$Cr$

DISTRIBUTION CENTER

ADJUSTMENT-TARGET REGION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006114006 A